**Europäisches Patentamt**

**European Patent Office** (11) Publication number: **0 188 440**

**Office européen des brevets** **B1**

(12) **EUROPEAN PATENT SPECIFICATION**

(45) Date of publication of the patent specification: (51) Int. Cl.⁴: **B 32 B 21/00**
19.04.89

(21) Application number: **85902546.2**

(22) Date of filling: **09.05.85**

(86) International application number:
**PCT/FI 85/00044**

(87) International publication number:
**WO 85/05321 (05.12.85 Gazette 85/26)**

(54) METHOD FOR THE PREPARATION OF ARTIFICIAL MARBLE PRODUCTS.

(30) Priority: **11.05.84 FI 841905**

(43) Date of publication of application:
**30.07.86 Bulletin 86/31**

(45) Publication of the grant of the patent:
**19.04.89 Bulletin 89/16**

(84) Designated Contracting States:
**DE FR GB IT SE**

(56) References cited:
**GB-A-2 064 986**
**US-A-4 312 822**

(73) Proprietor: **OY WILH.SCHAUMAN AB, PL 149, SF-40101 Jyväskylä 10 (FI)**

(72) Inventor: **PEKKINEN, Pertti, Touruniemi, SF- 40100 Jyväskylä 10 (FI)**

(74) Representative: **Rücker, Wolfgang, Dipl.- Chem., Hubertusstrasse 2, D-3000 Hannover 1 (DE)**

EP 0 188 440 B1

## Description

The present invention is concerned with a method for the preparation of artificial marble products of a structure of new type. These products can be used for applications of many sorts in order to replace conventionally produced products of artificial marble.

Artificial marble is a material which is produced by hardening a mixture of stone powder and an appropriate resin. As admixtures are used, e. g., colouring agents, which give the material an ornamental patterning resembling marble. The use of artificial marble has become common in particular in sanitary facilities. Among other objects of use should be mentioned animal fodder troughs, window sills, gravestones, and table tops.

A characteristic drawback of artificial marble products is their high weight.

When board-like products are produced, it is also possible to glue a thin artificial marble, e. g., onto wooden boards. The product obtained in this way and the method for its production, however, have significant detrimental properties:

 - it is difficult to make the boards remain straight,
 - by the effect of moisture, the boards split owing to the high tension caused by the surface layer,
 - glueing is expensive,
 - the artificial marble is fragile and difficult to handle,
 - fastening of fittings etc. to the board is difficult, the weight of the product is high.

The object of the present invention is to provide a method for the preparation of low-weight artificial marble products of new type, by means of which the drawbacks present in the products produced by glueing onto a board and in the methods for the production of same are avoided.

In the method now invented, a wooden core is enclosed in the mixture of artificial marble in a mould. The invention is the subject matter as specified in the claims.

Advantages of the products in accordance with the present invention are above all low weight and lower material cost. If, for example, one half of the volume of the entire artificial marble product is replaced by particle board, the weight of the product is reduced to about one third, and the raw-material cost is reduced to almost one half. Moreover, the products prepared in accordance with the invention have a stronger and more schock-proof structure, and it is easy toprovide them with fittings by means of screws.

GB-A-2 064 986 discloses a method for the preparation of an artificial marble product in which a resin is applied on only one surface of a wooden core. The product obtained is used as building element.

The method according to the invention is in particular suitable for the production of board-like products, such as table tops, window sills, as well as of wall and floor boards. The products are intended in particular for moist spaces.

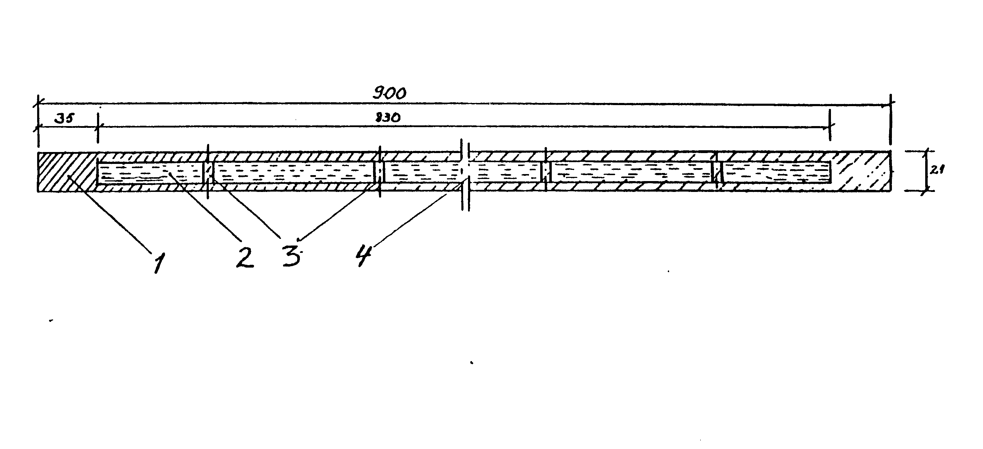

In the following, a preferred embodiment of the invention, for the preparation of a table top, will be illustrated in more detail with reference to the attached drawing.

The plane-bottom circular mould (diameter 900 mm) used in the method is made of fibreglass or stainless steel. The bottom of the mould faces the top face of the board to be produced, which said top face thereby easily becomes perfectly smooth. Moreover, the mould is provided with fastening means for precise positioning of the board. This guarantees homogeneous structure and remaining of the board straight. Before the mix is cast, the mould is coated with a detaching agent used for the purpose (e. g. TR-wax, high temp.), which makes sure that the board can be detached from the mould. To the detaching agent, it is possible to add agents by means of which a hard surface resistant to chemicals and fire is obtained for the board.

A suitable artificial marble mix 1 contains, e.g., 82 % of quartz-limestone sand and 18 % of polyester resin (e. g. "Norpol® 36-00") The density of such a mix is about 2 kg per litre. The conventional colouring agents etc. admixtures are added to the mix.

The wooden core 2 is a circular particle board (diameter 830 mm, thickness 12 mm). In order to promote the evacuation of air, holes 3 are drilled into the board (e. g. 5 mm holes with a spacing of about 100 mm). On casting, the holes are filled with mix, which also increases the strength of the product upon hardening.

Initially, mix is allowed to flow onto the bottom of the mould equalling the thickness of the bottom layer of the board. Thereupon the mould is vibrated so as to evacuate the air, so that possible air bubbles should not cause flaws in the product.

Onto the mix placed on the bottom of the mould, the core board is placed, which is covered with a mix layer of required thickness. Hereupon the mould is vibrated again so as to evacuate any air, for any air remaining between the mix and the core board produces a bubble in the surface of the product. Finally, the mix is allowed to harden in the conventional way in the room air or in a heated chamber, whereinafter the product is detached from the mould, inspected, and finished. The mould is cleaned and treated for a new casting operation.

The attached drawing also shows a hole 4 made into the centre point of the board.

## Claims

1. Method for the preparation of an artificial marble product in which a mix that contains sand and hardening resin is allowed to flow into a mould and to harden therein, characterized in that a wooden core having holes therein and being smaller than the mould is placed into the mould such that the artificial marble mix envelopes the wooden core when it is cast into the mould and allowed to harden therein.

2. Method as claimed in claim 1, characterised in that the mould is vibrated during the casting so as to evacuate any air out of the mould.

3. Method as claimed in claims 1 and 2, characterized in that mix is allowed to flow onto the bottom of the mould, the mould is vibrated, a wooden core is placed onto the mix, the wooden core is enclosed with the mix, and the mould is vibrated again.

4. Product of artificial marble obtained according to the method of claims 1 to 3, characterized in that there is a wooden core inside the product having holes therein.

5. Product as claim 4, characterized in that the wooden core consists of particle board.

**Patentansprüche**

1. Verfahren zur Herstellung von Kunstmarmorgegenständen unter Verwendung eines Gemisches aus Sand und härtbaren Harzes, daß in einer Form erstarren gelassen wird, dadurch gekennzeichnet, daß ein hölzerner Kern mit Löchern, der kleiner ist als die Form selbst, in die Form eingesetzt wird, der Art, daß die gießfähige Massemischung den hölzernen Kern einhüllt, wenn diese Masse in die Form eingefüllt wird, worauf die Masse aushärten gelassen wird.

2. Verfahren nach Anspruch 1, dadurch gekennzeichnet, daß die Form während des Gießens in Schwingungen versetzt wird, damit Luft aus der Form entweicht.

3. Verfahren nach Anspruch 1 und 2, dadurch gekennzeichnet, daß das Gemisch auf den Boden der Form gegossen wird, daß die Form in Schwingungen versetzt wird, daß in das Gemisch ein hölzerner Kern eingesetzt wird, daß der hölzerne Kern von dem Gemisch eingehüllt wird, und daß die Form in Schwingungen versetzt wird.

4. Produkt aus künstlichem Marmor, hergestellt nach einem Verfahren der Ansprüche 1 bis 3, dadurch gekennzeichnet, daß in dem Produkt ein hölzerner Kern enthalten ist, der mit Löchern versehen ist.

5. Produkt nach Anspruch 4, dadurch gekennzeichnet, daß der hölzerne Kern aus einer aus Teilchen gebildeten Platte besteht.

**Revendications**

1. Procédé pour la fabrication d'un produit en marbre artificiel, procédé selon lequel un mélange de sable et de résine durcissable est coulé, puis durci, dans un moule, caractérisé en ce qu'un noyau de bois, qui est pourvu de trous et qui est plus petit que le moule, est placé à l'intérieur du moule de façon que le mélange de marbre artificiel enveloppe ledit noyau de bois, lorsqu'il est coulé et durci dans le moule.

2. Procédé selon la revendication 1, caractérisé en ce que le moule est vibré pendant la coulée, de façon à évacuer l'air du moule.

3. Procédé selon les revendications 1 et 2, caractérisé en ce que du mélange est coulé sur le fond du moule, le moule est vibré, un noyau de bois est placé sur ledit mélange, ledit noyau est noyé dans du mélange, et le moule est de nouveau vibré.

4. Produit de marbre artificiel obtenu par la mise en oeuvre du procédé des revendication 1 à 3, caractérisé en ce qu'il comporte un noyau de bois pourvu de trous, disposé à l'intérieur dudit produit.

5. Produit selon la revendication 4, caractérisé en ce que ledit noyau de bois est un panneau particulaire.